# EUROPEAN PATENT SPECIFICATION

(11) **EP 3 461 155 B1**
(45) Date of publication and mention of the grant of the patent: **17.06.2020**
(21) Application number: 18193272.4
(22) Date of filing: 07.09.2018
(51) Int. Cl.: H04W 4/50, H04W 4/60, G06F 9/00, H04M 1/00, H04W 8/18, H04W 8/20, H04W 8/00, G06F 8/65, H04M 1/725

(54) **A METHOD OF MANAGING INTEGRATED CIRCUITS CARDS, CORRESPONDING CARD AND APPARATUS**
VERFAHREN ZUR VERWALTUNG VON IC KARTEN, ENTSPRECHENDE KARTE UND VORRICHTUNG
PROCÉDÉ POUR LA GESTION DE CARTES IC, CARTE IC ET DISPOSITIF CORRESPONDANTS

(30) Priority: 22.09.2017 IT 201700106423
(43) Date of publication of application: 27.03.2019
(73) Proprietor: STMicroelectronics S.r.l., 20864 Agrate Brianza (MB) (IT)
(72) Inventor: CHICHIERCHIA, Ms. Maria, I-81010 Castel Campagnano (Caserta) (IT); DI STASIO, Mr. Vitantonio, I-81100 Caserta (IT)
(74) Representative: Bosotti, Luciano

(56) References cited:
- CA-A1- 2 724 871
- US-A1- 2016 218 763
- "Smart Cards; Card Application Toolkit (CAT) (Release 14)", ETSI TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE , vol. SCP TEC, no. V14.0.0 22 May 2017 (2017-05-22), pages 1-247, XP014291103, Retrieved from the Internet: URL:http://www.etsi.org/deliver/etsi_ts/10 2200_102299/102223/14.00.00_60/ts_102223v1 40000p.pdf [retrieved on 2017-05-22]
- Iso/iec: "ISO/IEC 7816-4 Second Edition", , 15 January 2005 (2005-01-15), XP055462089, Retrieved from the Internet: URL:http://www.embedx.com/pdfs/ISO_STD_781 6/info_isoiec7816-4{ed21.0}en.pdf [retrieved on 2018-03-22]

## Description

### Technical field

The description relates to integrated circuit cards.

One or more embodiments may be applied e.g. to Universal Integrated Circuit Cards (UICC's) for use e.g. in mobile communication equipment.

### Technological background

Mobile communication equipment in e.g. GSM and UMTS networks may employ smart cards of the type currently referred to as Universal Integrated Circuit Card (UICC).

A UICC equipped with an Operating System, applications, electrical profile may use a SIM application running on top of UICC operating system to gain access from a GSM network and a USIM application to gain access from a UMTS network. A UICC may contain several applications, making it possible for a same smart card to give access to several networks by also providing facilities to the users.

A network operator may generally require from SIM/UICC manufacturers a set of applets, security domains and files that the smart card issuer stores in the smart card. This set of information is currently referred to as "operator profile".

A recent development of UICC's is represented by embedded UICC (eUICC's) which may be incorporated e.g. in a mobile terminal, thus enabling a user to change operator (and so its profile) over the air by means of a software procedure. An eUICC is also capable of managing multiple mobile network operator subscriptions, by making it possible for a user to enable/disable a current profile on the fly.

UICC and eUICC products do not represent static products insofar as they may be updated directly "on the field" by a mobile network operator in a silent mode, e. g. by using an over-the-air (OTA) protocol, so that the final user and the apparatus may not be aware of upgrades performed.

For instance, apparatus (e.g. user equipment such as a handset in a mobile communication network) where a SIM/USIM/(e)UICC card is inserted may load in its own memory during a boot phase the card profile in order to be able to manage network attach/detach, location update procedures, PLMN selection and so on by using data stored in such profile.

When an over-the-air binary message addressed to the UICC leads to one or more file updates, correct operation of the associated apparatus is facilitated by proper alignment of the card and the apparatus with the UICC image stored in the mobile memory updated correspondingly.

Mis-alignment of the actual UICC/eUICC content with respect to the one stored in the memory of the associated apparatus may result in unsatisfactory operation e.g. due to a delay between the time the file update operation is performed and the time the update is available for the user equipment. Also, the user may undesirably receive text asking him or her to turn the equipment off and then on again.

Document US 2016/218763 A1 discloses monitoring updates on a data carrier module by initializing the mobile device to communicate on a telecommunications network, updating data files on the data carrier module, and reinitializing the mobile device to communicate on the telecommunications network. Initializing the mobile device includes storing a list of version numbers for monitored data files and the monitored data files from the data carrier module in a cache. Updating includes updating the version number of a monitored data file when the content of the monitored data file is updated on the data carrier module. Reinitializing the mobile device includes determining whether the version numbers of any monitored data files have changed, copying updated monitored data files from the data carrier module to the cache in response to determining that the version numbers of such data files changed, and loading the monitored data files from the cache.

Document CA 2 724 871 A1 discloses a method for forcing a User Equipment (UE) that was registered on a non-preferred network operator to register immediately and seamlessly onto another available more preferred network operator, by updating the EF_LOCl in the UICC with the MCCMNC (i.e. PLMN ID) of the preferred network operator, and then sending the REFRESH - 3G Session Reset command to the Mobile Equipment (ME).

### Object and summary

An object of one or more embodiments is to contribute in providing improved solutions over the scenario discussed in the foregoing.

The invention is defined in independent claims 1, 7 and 8. According to one or more embodiments, that object can be achieved by means of a method having the features set forth in claim 1 that follows.

One or more embodiments may relate to a corresponding card and to corresponding apparatus.

One or more embodiments may provide for automatic notification to the apparatus where the SIM/UICC/eUICC is inserted after a remote update operation of files stored in the SIM/UICC/eUICC.

One or more embodiments may provide a mechanism at the UICC/eUICC operating system level to trigger refresh of the associated apparatus after a file update by an over-the-air message.

One or more embodiments may provide one or more of the following advantages:
- improvement of refresh management by avoiding the application level,
- reduction of at least one nesting level makes the operational phase faster,
- less complexity to be managed due to the possibility of avoiding to design and manage an application,
- over-the-air traffic reduced in comparison with conventional options.

One or more embodiments may involve moving operations from the application level to the operating system - OS level.

One or more embodiments may be implemented by using a set of functions/mechanisms already standardized at the ETSI/3GPP level.

### Brief description of the several views of the drawings

One or more embodiments will now be described, by way of example only, with reference to the annexed figures of drawing, wherein:
- Figure 1 is exemplary of apparatus adapted to include embodiments,
- Figure 2 is exemplary of a possible sequence associated to an over-the-air binary message performing one or more file updates in apparatus as exemplified in Figure 1,

- Figure 3 is exemplary of embodiments, and
- Figure 4 is a flow-chart exemplary of embodiments.

### Detailed description

In the ensuing description, one or more specific details are illustrated, aimed at providing an in-depth understanding of examples of embodiments of this description. The embodiments may be obtained without one or more of the specific details, or with other methods, components, materials, etc. In other cases, known structures, materials, or operations are not illustrated or described in detail so that certain aspects of embodiments will not be obscured.

Reference to "an embodiment" or "one embodiment" in the framework of the present description is intended to indicate that a particular configuration, structure, or characteristic described in relation to the embodiment is comprised in at least one embodiment. Hence, phrases such as "in an embodiment" or "in one embodiment" that may be present in one or more points of the present description do not necessarily refer to one and the same embodiment. Moreover, particular conformations, structures, or characteristics may be combined in any adequate way in one or more embodiments.

The references used herein are provided merely for convenience and hence do not define the extent of protection or the scope of the embodiments.

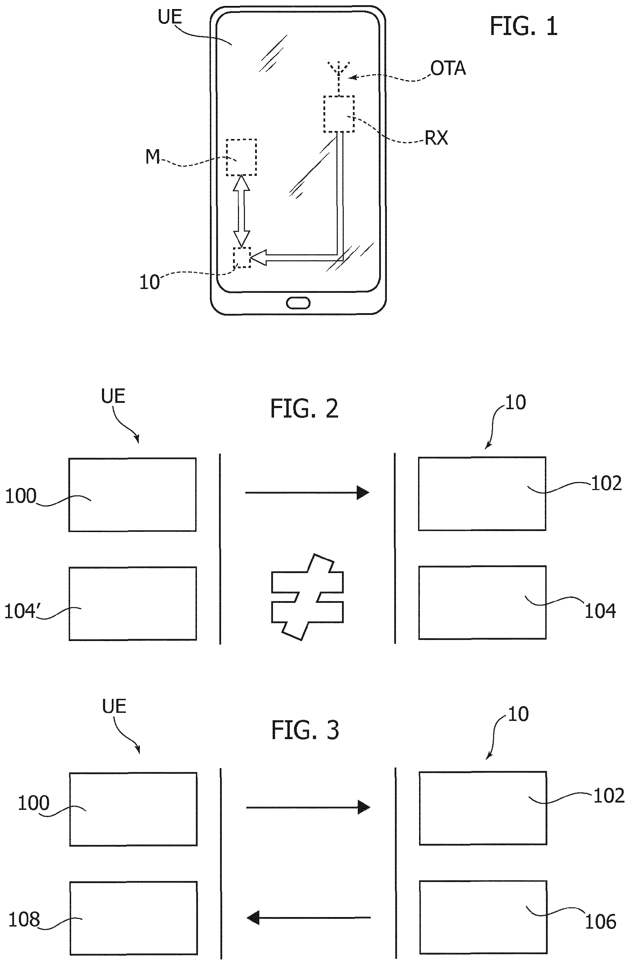

Figure 1 is exemplary of the possibility of using an integrated circuit card (UICC or eUICC) in apparatus such as a mobile communication equipment UE. A mobile terminal (User Equipment) such as a mobile phone or a tablet may be exemplary of such apparatus.

In one or more embodiments, the integrated circuit card functionality may be included in a so-called SIMon-Chip, adapted to be incorporated (e.g. soldered by resorting to surface mount technology - SMT) in apparatus as exemplified in Figure 1.

Apparatus UE is exemplified in Figure 1 as including a receiver circuit RX configured for receiving over-the-air messages OTA such as e.g. file update messages for the card 10 as well a memory M. Such an arrangement is conventional in the art, thus making it unnecessary to provide a more detailed description herein.

In one or more embodiments the memory M and the card 10 may be configured for co-operating as discussed in the following.

Figure 2 is exemplary of a situation which may occur when, as exemplified at 100, an over-the-air message transmitted e.g. by a mobile network operator results in a file update 102 (say, an update of a file Y) in an integrated circuit card (e.g. UICC or eUICC) as portrayed at 10 in Figure 1.

Figure 2 is exemplary of the fact that such an update operation may lead to in the (e.g. Y-file) content of the integrated circuit card memory (as indicated by 104) being different from the corresponding (non updated) Y-file content 104' in the memory M of apparatus e.g. UE.

These two files may in fact differ insofar as the user equipment (e.g. mobile phone) reads the contents of the files in the card as a result of being turned on. If, following an (e.g. OTA) file update operation, the user equipment is not turned off, a mis-alignment may arise. This may last until the equipment is turned off and on again, which may be a few minutes to several days.

In brief, as schematically represented in Figure 2, when an over-the-air message is dispatched by the integrated circuit card 10, mis-alignment of the contents of a notionally same file in the memory M of apparatus and the memory of integrated circuit card 10 may result.

It is observed that alignment of the apparatus memory (e.g. as used to interact with the network, the user or other peripherals) after a remote (e.g. OTA) operation on the card 10 may thus be facilitated by:
- switching off and then again on the apparatus to produce a bootstrap phase with such a bootstrap phase including a time frame where the card content is read and loaded in the memory of the apparatus,
- issuing a refresh command from the card 10 in order to cause a renewed reading of the card content by the apparatus.

In the former case, an operator message may advise a user unaware of the update asking him or her to turn the equipment off and then on. If however the user does not perceive the sound alert ("beep") or vibration indicative of the message or does not proceed with equipment turn off and on the former approach is ineffective and cannot solve the mis-alignment issue.

Especially the latter approach may involve loading and installing a specific application in the card (e.g. UICC/eUICC). Such an application will be in charge of a request for the apparatus to update the image of the UICC/eUICC with the newly updated values so that the user may not be exposed to any disservice or service disruption.

Certain costs may derive from "applet" development while further issues may be related to the card space for hosting and interoperability, e.g. running a same applet of cards of different suppliers/operators.

The application may adopt various options in order to manage such a refresh operation, e.g.:
- the application may be registered e.g. in the so-called File Update Event in order to be notified by the operating system of the integrated circuit card of any change with respect to a well-defined list of files,
- the application may be triggered by an additional over-the-air command requesting the refresh step.

Such approaches involve application design, deployment and interfacing via over-the-air messages. Also, the latter option considered above might result in a certain increase of traffic of over-the-air commands.

To sum up, approaches are desirable which are not exposed to the risk that the equipments is not switched off and then on by the user and/or do not suffer from increased memory requirements e.g. for storing an applet.

One or more embodiments may involve exploiting so-called RFU bits (RFU being an acronym for Reserved for Future Use) in the most significant nibble of the life cycle status information (LCSI) byte, briefly referred to as status byte.

In one or more embodiments, when a new elementary file is created in the card 10 (e.g. UICC/eUICC) the data field of the Create file command may contain (e.g. in its header) an "life cycle" information item such as e.g.
- 85 HEX - life cycle status information (LCSI)
- 01 length of LCSI
- LCSI information coded, e.g. as follows:

| b8 | b7 | b6 | b5 | b4 | b3 | b2 | b1 | Meaning |
|---|---|---|---|---|---|---|---|---|
| 0 | 0 | 0 | 0 | 0 | 0 | 0 | 0 | No information given |
| 0 | 0 | 0 | 0 | 0 | 0 | 0 | 1 | Creation state |
| 0 | 0 | 0 | 0 | 0 | 0 | 1 | 1 | Initialization state |
| 0 | 0 | 0 | 0 | 0 | 1 | - | 1 | Operational state-activated |
| 0 | 0 | 0 | 0 | 0 | 1 | - | 0 | Operational state-deactivated |
| 0 | 0 | 0 | 0 | 1 | 1 | - | - | Termination state |
| ≠ 0 | | | | X | X | X | X | Proprietary |
| Any other value | | | | | | | | RFU |

One or more embodiments may use such RFU bits in order to create a file with an additional "refreshability" status so that, e.g. after a remote file update, the card operating system will be able to issue (automatically and autonomously) a refresh command (if a refreshability indication is set) by reading the LCSI byte.

In that way the operating system of the card itself can manage automatically a refresh command at the end of an over-the-air update by facilitating prompt alignment of (all) the contents of the card (UICC/eUICC) files updated during the OTA session and its image as loaded in the associated apparatus.

In one or more embodiments, in the case plural files are updated with a (single) message (e.g. OTA), a single refresh command may be issued including a list of the updated files.

Such an approach is exemplified in Figure 3.

In Figure 3 the sequence of acts 100, 102 is as already discussed in connection with Figure 2, and to the update of the file content in the card memory (block 104 in Figure 2, not visible in Figure 3) an act is associated as exemplified by block 106 where the card prompts a refresh command of the corresponding file (e.g. file Y) in the memory of apparatus UE.

As a result (block 108) the apparatus will re-read the content of the Y file in the card 10 and align its memory to that content.

In that way, as a result of an over-the-air message dispatched by the card, if a corresponding value is set in the file, the card operating system may issue refresh command so that the card memory and the memory of apparatus UE will be (immediately) aligned.

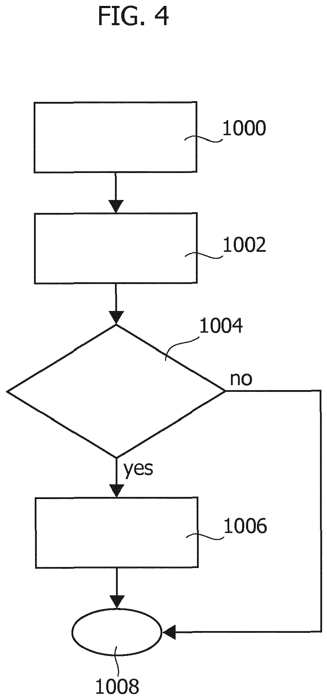

A corresponding procedure as exemplified in the flow chart of Figure 4 may involve the following parts:
- 1000: remote file update of e.g. an elementary file, say "Y",
- 1002: the operating system of the card performs the file update operation,
- 1004: a check is made as to whether corresponding information is provided e.g. in e.g. the high nibble of LCS by checking e.g. if the high nibble of LCSI > 1 for the Y file,
- 1006: as a result of the check of step 1004 yielding a positive outcome, the operating system of the card will prompt apparatus UE to perform a refresh operation of the e.g. Y file in its memory;
- 1008: this is an end step which may be reached after the step 1006 or as a result of a negative outcome of the step 1004.

In brief, in one or more embodiments, when a remote file update operation takes place, the operating system of the card 10 (UICC/eUICC, for example) may perform such an operation by also reading (e.g. before completing the operation) the most significant nibble of the life cycle status information - LCSI.

In case such a value is e.g. higher than 1, an indication is given that the file was created with a "refreshability" option so that the operating system of the card 10 may start a pro-active session by asking the apparatus UE to perform refresh file operation.

In one or more embodiments such a refresh command may be issued as a result of events such as e.g.:
- during a current section (e.g. the one following the latest card reset) a profile download command has been issued by the apparatus UE indicative of that apparatus being able to support such a capability as requested from the card;
- no other proactive session is running.

Such an approach may facilitate compliance with standard protocols between the card 10 and the apparatus UE. In such a condition a refresh command may be requested from the apparatus UE e.g. with a mode file change modification.

Use of one or more embodiments may be detected e.g. by:
- reading LCSI byte issued at file select,
- noting that, after a remote file update, a refresh occurs on a file with LCSI set at a given value e.g. higher than 1x,
- no application are present at the SIM/UICC/eUICC level,
- immediate alignment occurs between the card content and its image as loaded in the apparatus UE.

In one or more embodiments, a method may include:
- providing an integrated circuit card (e.g. 10) in mobile communication apparatus (e.g. UE) having apparatus memory (e.g. M),
- receiving (e.g. RX, 100, 1000) a (e.g. file) update message (e.g. OTA) at the integrated circuit card and updating (e.g. 102; 1002) the card content in compliance with the update message,
- issuing from the card an apparatus memory refresh command (e.g. 106, 108; 1006),
- refreshing the apparatus memory to (automatically) align the apparatus memory with the updated card content.

In one or more embodiments, refreshing the apparatus memory may include the apparatus re-reading (e.g. 108) an updated card content.

One or more embodiments may include:
- providing in the integrated circuit card a memory location for storing life cycle status information (LCSI), and
- writing in said memory location command issue code producing issue of said refresh command as a result of reception of said update message.

In one or more embodiments, a command issue code may be written in the reserved for future use or RFU bytes of the memory location for the life cycle status information.

One or more embodiments may include issuing the apparatus memory refresh command as a result of:
- a profile download command issued by the apparatus indicating apparatus ability to support the apparatus memory refresh command from the card,
- no concurrent proactive session being running.

One or more embodiments may include issuing the apparatus memory refresh command with mode file change modification.

One or more embodiments may include:
- receiving at the integrated circuit card a (single) update message for a plurality of files,
- issuing a (single) apparatus memory refresh command including a list of the files in said plurality of files (whereby a desired alignment can be achieved for the plurality of files with a single act.

One or more embodiments may relate to an integrated circuit card, the card insertable in a mobile communication apparatus (UE) having an apparatus memory, wherein the integrated circuit card is configured for receiving update messages, updating its content in compliance with the update messages received and issuing apparatus memory refresh commands for aligning the apparatus memory with the updated card content with the method of any of one or more embodiments.

In one or more embodiments, mobile communication apparatus (e.g. UE) having an apparatus memory (e.g. M) and a card according to one or more embodiments may include a receiver (e.g. RX) configured for receiving said update messages (e.g. as over-the-air file update messages) and transferring said messages to the integrated circuit card therein.

Without prejudice to the underlying principles, the details and embodiments may vary, even significantly, with respect to what has been described by way of example only, without departing from the extent of protection. The extent of protection is defined by the annexed claims.

## Claims

1. A method, including:
- providing an integrated circuit card (10) in a mobile communication apparatus (UE) having an apparatus memory (M),
- receiving (RX, 100, 1000) an update message (OTA) at the integrated circuit card (10) and updating (102; 1002) the card content in compliance with the update message,
- issuing from the card (10) an apparatus memory refresh command (106, 108; 1006),
- refreshing the apparatus memory (M) to align the apparatus memory with the updated card content.
wherein the method includes:
- providing in the integrated circuit card (10) a memory location for storing life cycle status information, the method being **characterized in that** it further includes:
- writing in said memory location a command issue code producing issue of said refresh command (106; 1006) as a result of reception of said update message.

2. The method of claim 1, wherein refreshing the apparatus memory includes the apparatus re-reading (108) an updated card content.

3. The method of claim 1, wherein the command issue code is written in the reserved for future use or RFU bytes of the memory location for the life cycle status information.

4. The method of any of the previous claims, including issuing the apparatus memory refresh command (106; 1006) as a result of:
- a profile download command issued by the apparatus (UE) indicating apparatus ability to support the apparatus memory refresh command from the card (10),
- no concurrent proactive session being running.

5. The method of any of the previous claims, including issuing the apparatus memory refresh command (106; 1006) with mode file change modification.

6. The method of any of the previous claims, including:
- receiving (RX, 100, 1000) at the integrated circuit card (10) an update message (OTA) for a plurality of files,
- issuing an apparatus memory refresh command (106, 108; 1006) including a list of the files in said plurality of files.

7. An integrated circuit card (10), the card (10) being insertable in a mobile communication apparatus (UE) having an apparatus memory (M), wherein the integrated circuit card (10) is configured for receiving (10; 1000) update messages, updating its content in compliance with the update messages received and issuing apparatus memory refresh commands (106; 1006) for aligning the apparatus memory with the updated card content, wherein:
- the integrated circuit card is provided with a memory location for storing life cycle status information, the integrated circuit card being **characterized in that**:
- said memory location is configured to have written therein a command issue code producing issue of said refresh command (106; 1006) as a result of reception of said update message.

8. Mobile communication apparatus (UE) having an apparatus memory (M) and including a card according to claim 7, the apparatus including a receiver (RX) configured for receiving update messages and transferring said update messages to the integrated circuit card therein (10).

## Patentansprüche

1. Verfahren, aufweisend:
- Bereitstellen einer Karte mit integriertem Schaltkreis (10) in einer mobilen Kommunikationsvorrichtung (UE), die einen Vorrichtungsspeicher (M) aufweist,
- Empfangen (RX, 100, 1000) einer Aktualisierungsnachricht (OTA) auf der Karte mit integriertem Schaltkreis (10) und Aktualisieren (102; 1002) des Karteninhalts in Erfüllung der Aktualisierungsnachricht,
- Ausgeben von der Karte (10) eines Auffrischbefehls (106, 108; 1006) für den Vorrichtungsspeicher,
- Auffrischen des Vorrichtungsspeichers (M), um den Vorrichtungsspeicher an den aktualisierten Karteninhalt anzugleichen,
wobei das Verfahren umfasst:
- Bereitstellen in der Karte mit integriertem Schaltkreis (10) eines Speicherorts zum Speichern von Lebensdauerzustandsinformationen, wobei das Verfahren **dadurch gekennzeichnet ist, dass** es außerdem aufweist:
- Schreiben in den Speicherort eines Befehlsausgabecodes, der eine Ausgabe des Auffrischbefehls (106; 1006) als ein Ergebnis des Empfangs der Aktualisierungsnachricht erzeugt.

2. Verfahren nach Anspruch 1, wobei das Auffrischen des Vorrichtungsspeichers aufweist, dass die Vorrichtung einen aktualisierten Karteninhalt neu liest (108).

3. Verfahren nach Anspruch 1, wobei der Befehlsausgabecode in den für eine zukünftige Nutzung reservierten Ort oder einen Ort für RFU-Bytes des Speicherorts für die Lebensdauerzustandsinformationen geschrieben wird.

4. Verfahren nach einem der vorhergehenden Ansprüche, das ein Ausgeben des Auffrischbefehls (106; 1006) für den Vorrichtungsspeicher aufweist als ein Ergebnis davon, dass:
- ein Profil-Download-Befehl, der durch die Vorrichtung (UE) ausgegeben wird und eine Vorrichtungsfähigkeit anzeigt, den Auffrischbefehl für den Vorrichtungsspeicher von der Karte (10) aus unterstützt,
- keine gleichzeitige proaktive Sitzung abläuft.

5. Verfahren nach einem der vorhergehenden Ansprüche, das ein Ausgeben des Auffrischbefehls (106; 1006) für den Vorrichtungsspeicher mit einer Modifikation eines Modusdateiwechsels aufweist.

6. Verfahren nach einem der vorhergehenden Ansprüche, aufweisend:
- Empfangen (RX, 100, 1000) auf der Karte mit integriertem Schaltkreis (10) einer Aktualisierungsnachricht (OTA) für eine Vielzahl von Dateien,
- Ausgeben eines Auffrischbefehls (106, 108; 1006) für den Vorrichtungsspeicher, der eine Liste der Dateien in der Vielzahl von Dateien aufweist.

7. Karte mit integriertem Schaltkreis (10) wobei die Karte (10) in eine mobile Kommunikationsvorrichtung (UE) einfügbar ist, die einen Vorrichtungsspeicher (M) aufweist, wobei die Karte mit integriertem Schaltkreis (10) konfiguriert ist zum Empfangen (100; 1000) von Aktualisierungsnachrichten, zum Aktualisieren ihres eigenen Inhalts in Erfüllung der empfangenen Aktualisierungsnachrichten und zum Ausgeben von Auffrischbefehlen (106; 1006) für den Vorrichtungsspeicher, um den Vorrichtungsspeicher an den aktualisierten Karteninhalt anzugleichen, wobei:
- die Karte mit integriertem Schaltkreis mit einem Speicherort zum Speichern von Lebensdauerzustandsinformationen bereitgestellt wird, wobei die Karte mit integriertem Schaltkreis **dadurch gekennzeichnet ist, dass**:
- der Speicherort dazu konfiguriert ist, dass in ihn ein Befehlsausgabecode geschrieben ist, der eine Ausgabe des Auffrischbefehls (106; 1006) als ein Ergebnis des Empfangs der Aktualisierungsnachricht erzeugt.

8. Mobile Kommunikationseinrichtung (UE), die einen Vorrichtungsspeicher (M) aufweist und eine Karte nach Anspruch 7 umfasst, wobei die Vorrichtung einen Empfänger (RX) umfasst, der konfiguriert ist zum Empfangen von Aktualisierungsnachrichten und zum Weiterleiten der Aktualisierungsnachrichten an die darin enthaltene Karte mit integriertem Schaltkreis (10).

## Revendications

1. Procédé, comprenant :
- la fourniture d'une carte à circuit intégré (10) dans un appareil de communication mobile (UE) ayant une mémoire d'appareil (M),
- la réception (RX, 100, 1000) d'un message de mise à jour (OTA) au niveau de la carte à circuit intégré (10) et la mise à jour (102 ; 1002) du contenu de carte conformément au message de mise à jour,
- l'émission, par la carte (10), d'une commande de rafraîchissement de mémoire d'appareil (106, 108 ; 1006),
- le rafraîchissement de la mémoire d'appareil (M) pour aligner la mémoire d'appareil avec le contenu de carte mis à jour,
le procédé comprenant :
- la fourniture, dans la carte à circuit intégré (10), d'un emplacement de mémoire destiné à stocker des informations d'état de cycle de vie, le procédé étant **caractérisé en ce qu'**il comprend en outre :
- l'écriture, dans ledit emplacement de mémoire, d'un code d'émission de commande produisant l'émission de ladite commande de rafraîchissement (106 ; 1006) en résultat de la réception dudit message de mise à jour.

2. Procédé selon la revendication 1, dans lequel le rafraîchissement de la mémoire d'appareil comprend la relecture (108), par l'appareil, d'un contenu de carte mis à jour.

3. Procédé selon la revendication 1, dans lequel le code d'émission de commande est écrit dans les octets réservés pour une utilisation future, ou RFU, de l'emplacement de mémoire destiné aux informations d'état de cycle de vie.

4. Procédé selon l'une quelconque des revendications précédentes, comprenant l'émission de la commande de rafraîchissement de mémoire d'appareil (106 ; 1006) en résultat :
- d'une commande de téléchargement de profil émise par l'appareil (UE) indiquant la capacité de prise en charge, par l'appareil, de la commande de rafraîchissement de mémoire d'appareil provenant de la carte (10),
- du fait qu'aucune session proactive simultanée n'est en cours d'exécution.

5. Procédé selon l'une quelconque des revendications précédentes, comprenant l'émission de la commande de rafraîchissement de mémoire d'appareil (106 ; 1006) en mode modification de changement de fichier.

6. Procédé selon l'une quelconque des revendications précédentes, comprenant :
- la réception (RX, 100, 1000), au niveau de la carte à circuit intégré (10), d'un message de mise à jour (OTA) pour une pluralité de fichiers,
- l'émission d'une commande de rafraîchissement de mémoire d'appareil (106, 108 ; 1006) comprenant une liste des fichiers figurant dans ladite pluralité de fichiers.

7. Carte à circuit intégré (10), la carte (10) étant susceptible d'être insérée dans un appareil de communication mobile (UE) ayant une mémoire d'appareil (M), la carte à circuit intégré (10) étant configurée pour recevoir (100 ; 1000) des messages de mise à jour, mettre à jour son contenu conformément aux messages de mise à jour reçus et émettre des commandes de rafraîchissement de mémoire d'appareil (106 ; 1006) destinées à aligner la mémoire d'appareil avec le contenu de carte mis à jour,
- la carte à circuit intégré étant pourvue d'un emplacement de mémoire destiné à stocker des informations d'état de cycle de vie, la carte à circuit intégré étant **caractérisée en ce que** :
- ledit emplacement de mémoire est configuré pour qu'y soit écrit un code d'émission de commande produisant l'émission de ladite commande de rafraîchissement (106 ; 1006) en résultat de la réception dudit message de mise à jour.

8. Appareil de communication mobile (UE) ayant une mémoire d'appareil (M) et comprenant une carte selon la revendication 7, l'appareil comprenant un récepteur (RX) configuré pour recevoir des messages de mise à jour et transférer lesdits messages de mise à jour à la carte à circuit intégré (10) en son sein.
